Europäisches Patentamt

European Patent Office

Office européen des brevets

(11) Veröffentlichungsnummer: **0 282 830 B1**

(12) **EUROPÄISCHE PATENTSCHRIFT**

(45) Veröffentlichungstag der Patentschrift: **02.09.92**

(21) Anmeldenummer: **88103258.5**

(22) Anmeldetag: **03.03.88**

(51) Int. Cl.⁵: **B64C 23/06**, B64C 5/08, B64C 11/16, B63B 3/38, B63H 1/26, //F01D5/14

(54) **Flügelartige profilierte Einrichtung die von einem Gas oder Fluid umströmt wird und zur Verbesserung des Wirkungsgrades streifenförmige profilierte Flügel aufweist.**

(30) Priorität: **31.12.87 DE 3744582**
**13.03.87 DE 3708159**

(43) Veröffentlichungstag der Anmeldung:
**21.09.88 Patentblatt 88/38**

(45) Bekanntmachung des Hinweises auf die Patenterteilung:
**02.09.92 Patentblatt 92/36**

(84) Benannte Vertragsstaaten:
**AT BE CH DE ES FR GB GR IT LI NL SE**

(56) Entgegenhaltungen:
**DE-A- 3 621 800      FR-A- 418 047**
**FR-A- 2 355 188      GB-A- 196 410**
**GB-A- 2 114 515      US-A- 1 466 551**
**US-A- 4 671 473**

**MARINE ENGINEERING AND SHIPBUILDING, Band 80, Nr. 9, September 1968, Seite 329, Institute of marine engineers, London, GB; "Enginneering Abstracts"**

(73) Patentinhaber: **SPRANGER, Günter**
**Wagnerstrasse 2**
**W-2000 Hamburg 76(DE)**

(72) Erfinder: **SPRANGER, Günter**
**Wagnerstrasse 2**
**W-2000 Hamburg 76(DE)**

(74) Vertreter: **Schmidt-Bogatzky, Jürgen, Dr. Ing. Huth, Dietrich & Partner et al**
**Warburgstrasse 50**
**W-2000 Hamburg 36(DE)**

EP 0 282 830 B1

## Beschreibung

Die Erfindung betrifft eine flügelartige profilierte Einrichtung, die von einem Gas oder einem Fluid umströmt wird und zur Verbesserung des aerodynamischen oder hydraulischen Wirkungsgrads profilierte Spaltflügelelemente mindestens eines Spaltflügels mit einem Flügelfuß und einem Flügelrand aufweist, zwischen denen zur Verschiebung der Strömungsabrißzone jeweils ein sich zum flügelspitzenseitigen Flügelrand des Spaltflügels zu einer maximalen Breite erweiternder Spalt angeordnet ist.

Eine derartige Einrichtung ist durch die DE-C-31 05 183 bekannt. Bei dieser Einrichtung besteht jedoch der Nachteil, daß bei größeren Baulängen der streifenförmigen Flügel diese aufgrund ihrer Elastizität schwingen können, was die Strömung des Fluids oder Gases beeinträchtigen kann. Zur Vermeidung dieser Nachteile sind daher außerordentlich hochwertige Wirkstoffe erforderlich, wodurch die Herstellungskosten dieser bekannten Einrichtung extrem erhöht werden. Außerdem hat es sich gezeigt, daß mit dieser bekannten Einrichtung die Strömungsverluste durch Verminderung des Einflusses von Strömungswirbeln zwar verringert werden, die Steigerung des Wirkungsgrades und damit der Energieausnutzung aber doch begrenzt ist.

In der FR-A-2355 188 ist die Ausbildung von Flügelenden der Tragflügel von Flugzeugen beschrieben. Die Tragflügel selbst sind konventionell einstückig ausgebildet. Lediglich am äußeren Flügelrand, an dem ein Tank oder eine Materialverstärkung angeordnet ist, sind radial zur Querachse des Tragflügels kleine Flügelstummel angeordnet. Diese sind zur Flügelebene jeweils unterschiedlich geneigt und in Richtung der Querachse des Tragflügels zueinander versetzt angeordnet.

In der ZS "Marine Engineering and Shipbuilding, Band 80, Nr. 9, September 1968, S. 329, ist ferner ein Schiffspropeller beschrieben, bei dem die Propellerflügel durch radiale Schlitze in Flügelelemente aufgeteilt sind. Es findet keine Veränderung des Gesamtprofils statt. Dieser Schiffspropeller erfordert ferner eine besonders ausgebildete Nabe.

Die Aufgabe der Erfindung besteht darin, die flügelartige profilierte Einrichtung der eingangs genannten Art so zu verbessern, daß bei vereinfachter Herstellung der aerodynamische oder hydraulische Wirkungsgrad optimiert und ein universeller Einsatzbereich von Fluiden oder Gasen umströmten Bauteilen erzielt wird.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben. Die erfindungsgemäße Einrichtung ist universal an von Fluiden oder Gasen umströmten Bauteilen einsetzbar, so insbesondere zur Ausbildung von Tragflügeln, Propellerflügeln von Schraubenpropellern und Hubschrauber-Rotoren, Flügeln an Schiffsrümpfen und Schiffskielen u. dgl.

Die Erfindung wird nachstehend am Beispiel der in den Zeichnungen dargestellten Einrichtungen näher erläutert. Es zeigt

Fig. 1
eine Ausführung eines erfindungsgemäßen Spaltflügels in einer Ansicht von vorn,

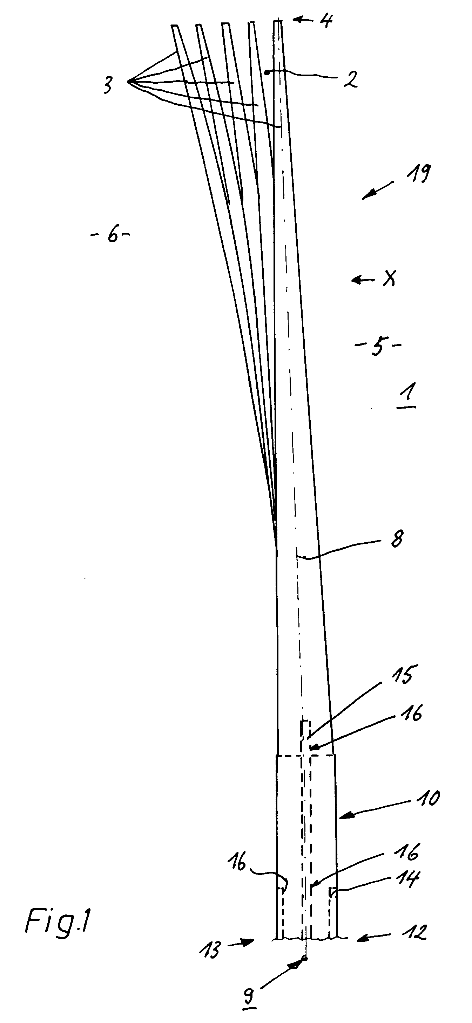

Fig. 2
den Flügelfuß des Spaltflügels nach Fig. 1 in einer schematischen perspektivischen Ansicht,

Fig. 3
den Spaltflügel nach Fig. 1 in einer Seitenansicht,

Fig. 4a
eine weitere Ausführungsform eines Spaltflügels in einer Queransicht im Schnitt mit aneinanderliegendem Spaltflügelelementen,

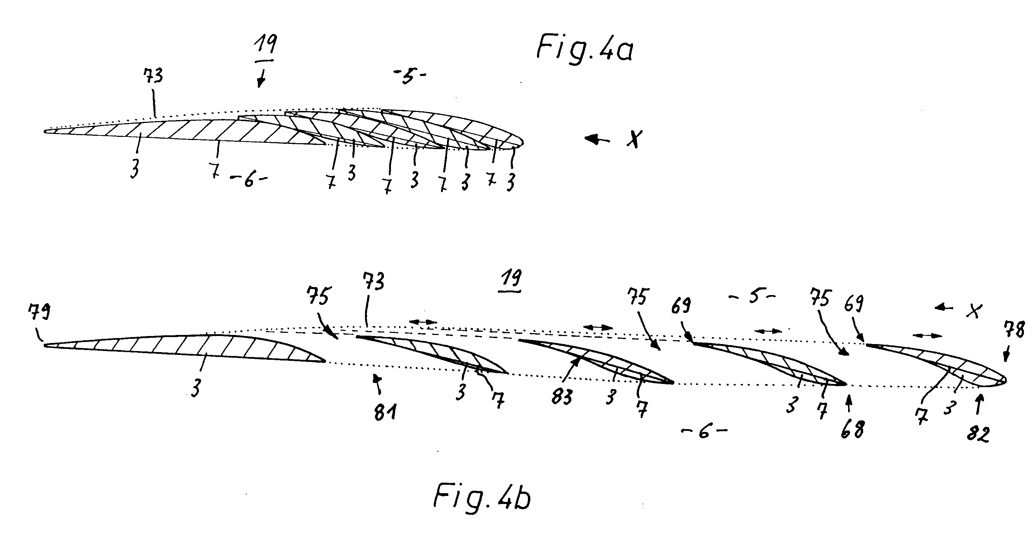

Fig. 4b
den Spaltflügel nach Fig. 4a mit auseinandergeschwenkten Spaltflügelelementen in einer Queransicht im Schnitt,

Fig. 5
ein Diagramm über Vergleichsmessungen eines Normalprofils und eines Spaltflügels,

Fig. 6
einen Schraubenpropeller in einer perspektivischen Ansicht,

Fig. 7 und 8
den Strömungsverlauf an einem Normalflügel und an einem Spaltflügel eines Schraubenpropellers in schematischen Ansichten,

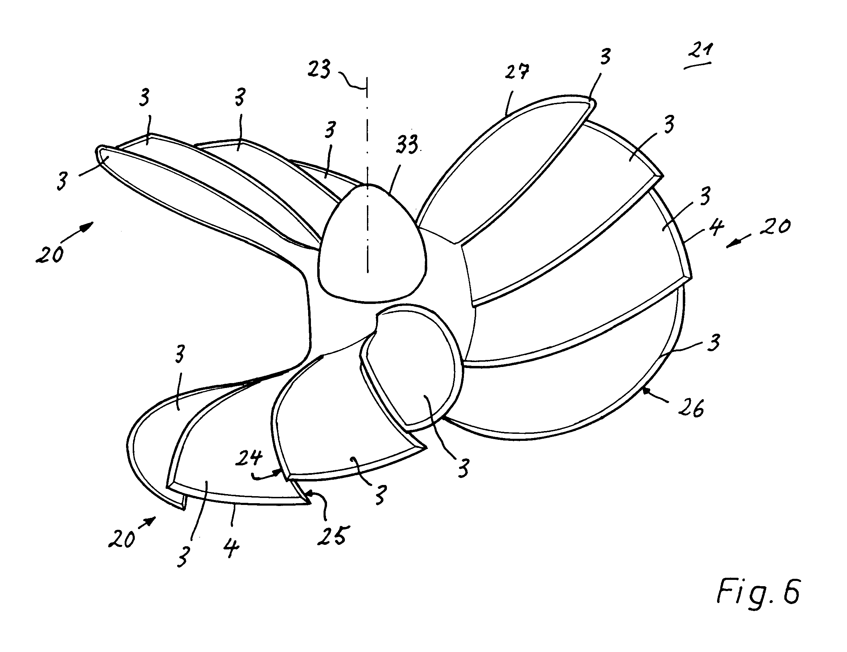

Fig. 9
einen Propellerflügel des Schraubenpropellers nach Fig. 6 in einer schematischen Seitenansicht,

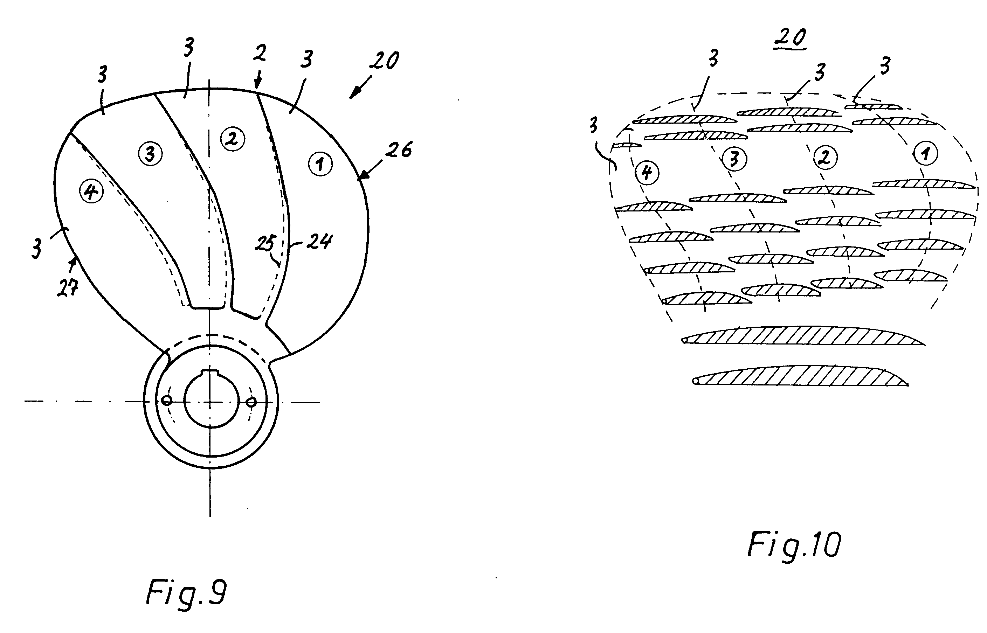

Fig. 10
die Querschnitte der Spaltflügelelemente eines Propellerflügels nach Fig. 9 in einer schematischen Ansicht,

Fig. 11
einen Kiel mit einer erfindungsgemäßen Einrichtung in der Seitenansicht,

Fig. 12
ein Flügelpaar für einen Kiel in einer schematischen Draufsicht,

Fig. 13
das Flügelpaar nach Fig. 12 in einer Draufsicht in einer Explosionsdarstellung,

Fig. 14
eine Ansicht auf den Flügelrand,

Fig. 15
den Flügel nach Fig. 13 in einer Queransicht im Schnitt A-A,

Fig. 16
eine schematische Ansicht auf einen Kiel mit Flügeln in Richtung B-B mit einer Flügelverstelleinrichtung,
Fig. 17a bis 17c
eine weitere Ausbildung einer Flügelverstelleinrichtung in einer Seitenansicht, Queransicht und Draufsicht.

Wie in Fig. 1 dargestellt, besteht die Einrichtung zur Verbesserung des aerodynamischen oder hydraulischen Wirkungsgrades von flügelartigen Bauelementen aus einem besonders ausgebildeten Flügelkopf 1, der entweder einstückig an einem Gesamtflügel 9 ausgebildet ist oder aber mit einem Rumpfflügel 12 zu einem Gesamtflügel 9 verbunden werden kann. An dem Flügelkopf 1 sind Spaltflügelelemente 3 angeordnet, die mit einem Flügelfuß 10 verbunden sind. Die Spaltflügelelemente 3 sind derart ausgebildet, daß die Flügelränder 4 der in Anströmrichtung X aufeinander folgenden Spaltflügelelemente 3 zueinander jeweils in Richtung der Druckzone 6 des Spaltflügelprofils versetzt sind. Die Profilsehnen 7 der einzelnen Spaltflügelelemente 3 können hierbei allgemein parallel zueinander angeordnet sein. Vorteilhafter ist es jedoch, für die einzelnen Spaltflügelelemente 3 eine differenzierte Steigung vorzusehen. Die auf dem in Anströmrichtung X ersten Spaltflügelelemente 3 folgenden weiteren Spaltflügelelemente 3 sind bezogen auf die jeweilige Längsachse 8 des Gesamtflügels 9 derart konvex gekrümmt ausgebildet, daß die radial gerichtete Strömung des Fluids oder Gases abstromseitig in eine allgemein rechtwinklig zur radialen Strömung gerichtete Strömung umgelenkt wird. Vorteilhaft ist es, die Spaltflügelelemente 3 etwa über den Bereich des äußeren Drittels der Länge des Gesamtflügels 9 sich erstreckend anzuordnen. Hierbei ist der freie Durchströmquerschnitt der Spalte 2 zwischen den Spaltflügelelementen 3 so ausgebildet, daß er sich radial zu einem Maximum am jeweiligen Flügelrand 4 vergrößert.

Es ist möglich, das in Anströmrichtung X vordere Spaltflügelelement 3 allgemein koaxial zur Längsachse 8 des Gesamtflügels 9 auszurichten und die folgenden Spaltflügelelemente 3 zur Druckzone 6 vorgewölbt auszubilden. Bei besonderen Betriebsbedingungen können auch das oder die in Anströmrichtung X vordere(n) Spaltflügelelement(e) 3 in der Ebene der Längsachse 8 des Gesamtflügels 9 in Anströmrichtung X vorgewölbt sein. In diesem Fall ist mindestens ein mittleres Spaltflügelelement 3 allgemein koaxial zur Längsachse 8 des Gesamtflügels 9 ausgerichtet, während die in Abströmrichtung folgenden Spaltflügelelemente 3 zur Druckzone 6 vorgewölbt sind. Die Spaltflügelelemente 3 sind mit einem Laminarprofil ausgebildet, um optimale Strömungsverhältnisse zu erzielen. Möglich ist es, die Spalte 2 zwischen den Spaltflügelelementen 3 düsenförmig auszubilden.

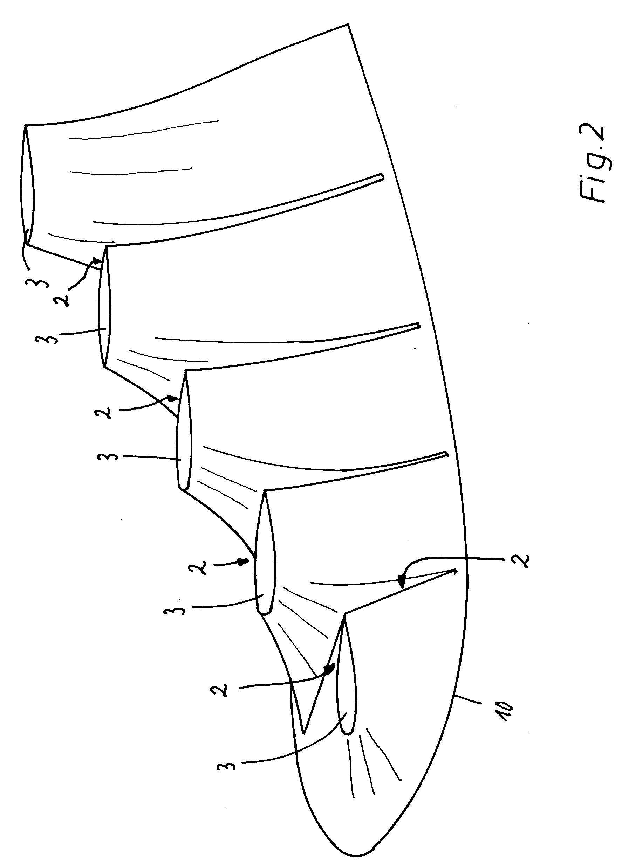

Wie in Fig. 2 angedeutet, sind die Spaltflügelelemente 3 mit dem Flügelfuß 10 verbunden und in dessen Profil integriert. Die Spaltflügelelement 3 und der Flügelfuß 10 können einstückig ausgebildet sein und aus einem hochlegierten ggf. hochtemperaturbeständigen Metall bestehen. Derartige Flügelköpfe 1 eignen sich insbesondere für Gasturbinen, bei denen dann der Flügelfuß 10 auf dem Läufer des Rotors befestigt wird. Sie können sowohl im Flügelfuß 10 wie auch in den Spaltflügelelementen 3 mit Kühlkanälen versehen sein, um die Flügelköpfe 1 mit einem Kühlmedium kühlen zu können. Es ist auch möglich, für andere Strömungsmaschinen die Spaltflügelelemente 3 und den Flügelfuß 10 einstückig aus einem hochtemperaturbeständigen keramischen Werkstoff auszubilden.

Insbesondere zur Verwendung bei Windkraftrotoren können die Spaltflügelelemente 3 und der Flügelfuß 10 aus einem Kunststoff, Holz oder Metall bestehen, wobei jedes Spaltflügelelement 3 mittels einer Klebverbindung 16 mit dem Flügelfuß 10 verbunden sein kann. Ein derart ausgebildeter Flügelkopf 1 kann mittels einer Kupplung od. dgl. mit einem Rumpfflügel 12 zu einem Gesamtflügel 9 verbunden werden.

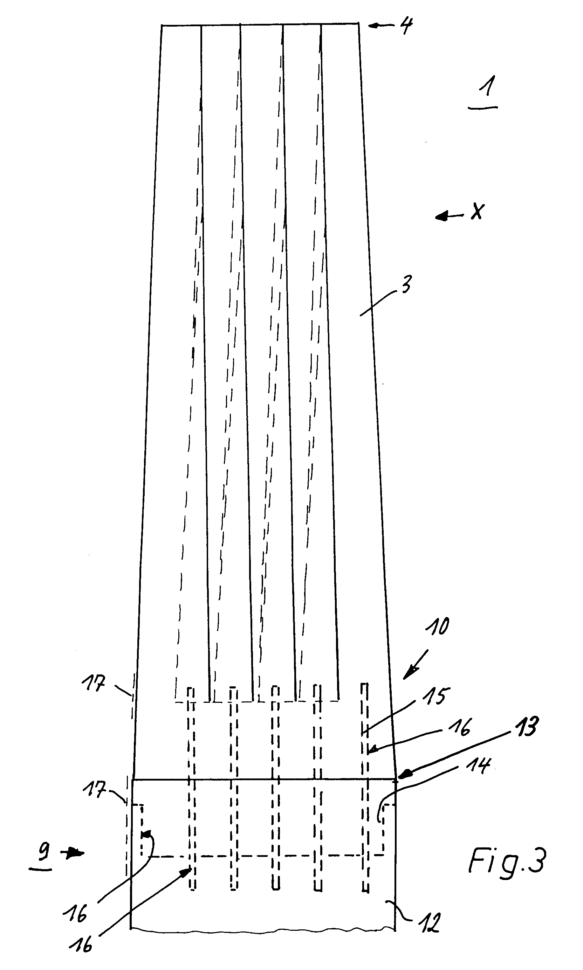

In den Fig. 3 ist eine besondere Ausbildung einer Kupplung dargestellt. An dem äußeren Endabschnitt 13 des Rumpfflügels 12 ist eine Ausnehmung 14 ausgebildet, in die der untere Abschnitt des Flügelkopfes 1 geschoben und mittels einer Klebverbindung 16 mit dem Rumpfflügel 12 verbunden ist. An jedem Spaltflügelelement 3 ist ein Zapfen 15 ausgebildet, der durch den Flügelfuß 10 geführt und in den Rumpfflügel 12 gesteckt ist. Jeder Zapfen 15 ist mit dem Flügelkopf 1 und dem Rumpfflügel 12 ebenfalls durch z. B. Klebverbindungen 16 verbunden. Im Bereich der Verbindungsabschnitte der Spaltflügelelemente 3 mit dem Flügelfuß 10 und des Flügelkopfes 1 mit dem Rumpfflügel 12 ist eine Laminatschicht 17 aus Kunststoff od. dgl. aufgetragen, deren äußere Oberfläche dem Profil der Spaltflügelelemente 3, des Flügelfußes 10 und des Rumpfflügels 12 angepaßt ist. Zur Erhöhung der Festigkeit ist es zweckmäßig, die Laminatschicht 17 faserverstärkt auszubilden.

Ein derart ausgebildeter Flügelkopf 1 ermöglicht es, als Nachrüstbauteil bereits bestehende und im Einsatz befindliche Windkraftrotoren in ihrer Leistung zu verbessern. Hierzu ist es lediglich erforderlich, die vorhandenen Flügel zu einem Rumpfflügel 12 zu verkürzen und auf dessen Endabschnitt dann jeweils einen Flügelkopf 1 der oben beschriebenen Art aufzusetzen.

Es ist auch möglich, einen aus Spaltflügelelementen 3 gebildeten Spaltflügel 19 so auszubilden, daß die Spaltflügelelemente 3 in der radialen Ebene von einer aneinanderliegenden Stellung (Fig. 4a) in eine distanzierte Spreizstellung (Fig. 4b) verschwenkbar sind. In diesem Fall sind in dem Flügelfuß 10 für die Verstellung der Spaltflügelelemente 3 Stellantriebe vorgesehen, die elektrisch oder hydraulisch wirken können. So ist es z. B. möglich, jedes Spaltflügelelement 3 mit einem elektrischen Stellmotor mit einem stark untersetzenden Getriebe zu verbinden. Die Stellantriebe können so mit einer elektronischen Regeleinrichtung in Wirkverbindung stehen, daß entweder alle Spaltflügelelemente 3 gemeinsam oder aber nur bestimmte ausgewählte Spaltflügelelemente 3 verschwenkt werden. Es ist auch möglich, mindestens eines der Spaltflügelelemente 3 um seine Längsachse verdrehbar auszubilden. Hierdurch kann gezielt eine Störung der Umströmung des Spaltflügels 19 bewirkt werden, wenn es die jeweiligen Betriebsbedingungen erfordern. Wie Fig. 4a verdeutlicht, kann bei entsprechender Profilierung der Spaltflügelelemente 3 nach deren Aufeinanderschwenken ein Hochleistungsprofil erzeugt werden, das insbesondere für höhere Anströmgeschwindigkeiten geeignet ist. Bei geringen Anströmgeschwindigkeiten wird der fünfgliedrige Spaltflügel 19 in eine Stellung wie z. B. in Fig. 4b dargestellt aufgefächert. Die Spaltflügelelemente 3 befinden sich stets innerhalb einer durch die Ausbildung des Spaltflügels 19 vorgegebenen Profilumhüllenden 73 (Fig. 4a und 4b). Im Bereich der unterdruckseitigen Spaltendabschnitte 75 sind die Abströmkanten 69 der Spaltflügelelemente 3 scharfkantig ausgebildet. Durch die Spreizung der Spaltflügelelemente 3 wird ohne merkliche Erhöhung des induzierten Widerstandes eine erhebliche Verbesserung des Auftriebs erzielt. Unter Einhaltung der Profilgeometrie eines Laminarprofils beeinflußt die Scherströmung den Wirbelzopf so, daß die Wirbelschleppe verkürzt und der Wirkungsgrad entscheidend verbessert wird. Bei Möglichkeit der Einzelsteuerung der Spaltflügelelemente 3 ist es gewährleistet, den jeweiligen Energieumsatz maximal zu nutzen.

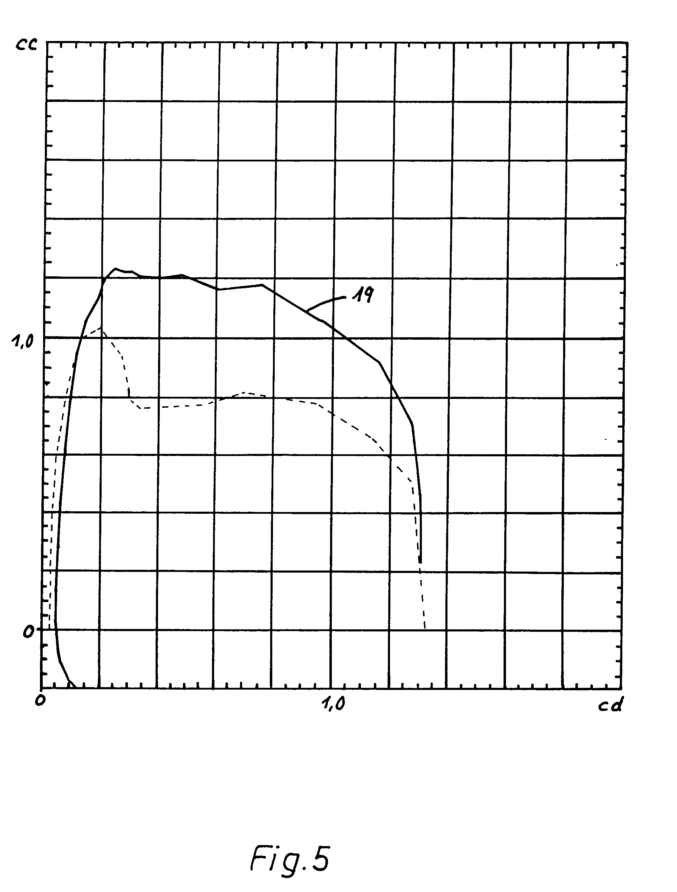

Das Diagramm nach Fig. 5 verdeutlicht die Vorteile des Spaltflügels 19. Dieses Diagramm zeigt ein Versuchsergebnis, bei dem bei gleichen Anströmgeschwindigkeiten ein einstückiges Basisprofil und ein aus fünf Spaltflügelelementen 3 bestehender Spaltflügel 19 vermessen wurde. Die Profilumhüllende 73 des Spaltflügels 19 entspricht dem Basisprofil. Es ist deutlich erkennbar, daß bei gleichen Widerstandsbeiwerten cd die Querkraftbeiwerte cc des Spaltflügels 19 höher sind als beim Basisprofil.

In Fig. 6 ist ein Propeller 21 dargestellt, der drei Propellerflügel 20 aufweist. Jeder Propellerflügel 20 ist spreizflügelartig ausgebildet und weist vier Spaltflügelelemente 3 auf. Diese Spaltflügelelemente 3 sind profiliert. Zu ihrer Ausbildung erstrecken sich drei radial angeordnete in jedem Propellerflügel 20 konvex verlaufende Spalte 2. Die Spalten 2 erstrecken sich etwa von der Propellernabe 33 bis zum Flügelrand 4. Die Profilierung der Spaltflügelelemente 3 ist so, daß die einzelnen in Umdrehungsrichtung aufeinander folgenden Spaltflügelelemente 3 eines jeden Propellerflügels 20 zum Flügelrand 4 und in Abströmrichtung zueinander versetzt ausgebildet sind.

Die vorderen Spaltflügelelemente 3 sind allgemein radial zur Propellernabe 33 ausgerichtet. Die mittleren Spaltflügelelemente 3 und die hinteren Spaltflügelelemente 3 sind zur Druckzone vorgewölbt. Hierbei sind die Spaltflügelelemente 3 jeweils versetzt zueinander ausgebildet. Die vorderen Spaltflügelelemente 3 sind in einer radialen Normalebene angeordnet, die schiefwinklig zur Propellerlängsachse 23 zur Druckzone ausgerichtet ist.

Die vom Fluid umströmten Flächen der Spaltflügelelemente 3 sind etwa gleich groß. Die mittleren Spaltflügelelemente 3 erstrecken sich allgemein radial zur Propellernabe 33, während das vordere Spaltflügelelement 3 zu den mittleren Spaltflügelelementen 3 vorgekrümmt und der hintere Spaltflügelelement 3 zu den mittleren Spaltflügelelementen 3 zurückgekrümmt ist.

Die Spaltkanten 24, 25 der einander zugewandten Randseiten der Spaltflügelelemente 3 können zur Propellerebene schiefwinklig, zueinander aber allgemein parallel angeschärft sein. Hierdurch wird die Profilwölbung der einzelnen Spaltflügelelemente 3 verstärkt.

Die an- und abströmseitigen Randseiten 26, 27 können ebenfalls zur Propellerebene schiefwinklig angeschärft sein. Besonders vorteilhaft ist es, die Spalte 2 düsenförmig auszubilden und die Spaltflügelelemente 3 mit einem Laminarprofil zu versehen.

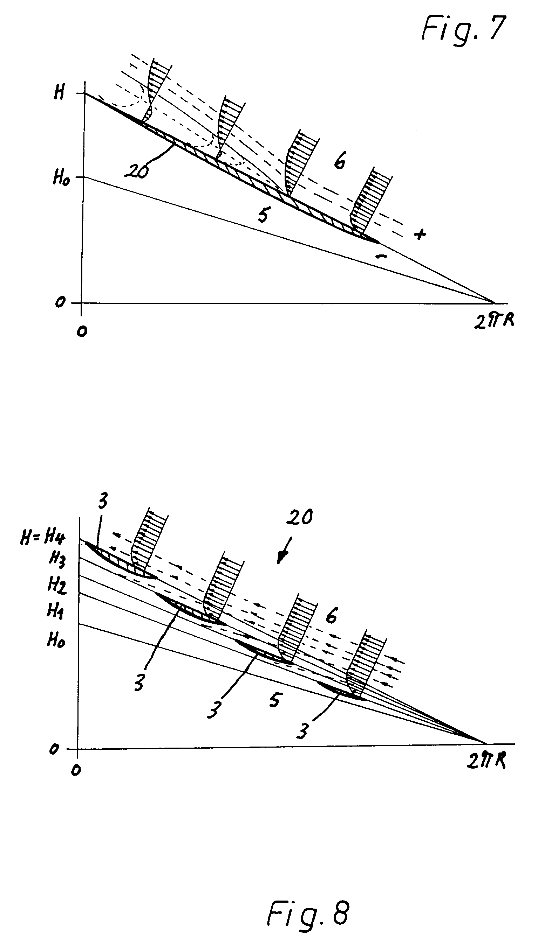

Durch die Ausbildung der Spalte 2 in den einzelnen Propellerflügeln 20 ist es möglich, die bei konventionellen Schiffsschrauben abströmseitig auftretenden Unterdruckzonen zu verringern. Turbulenzen sowie die Gefahr des Eintritts von Kavitation werden vermindert. In Fig. 7 und 8 ist der Unterschied des Strömungsverlaufs an einem üblichen einstückigen Propellerflügel 20 und an einem in Spaltflügelelementen 3 aufgeteilten weiteren Propellerflügel 20 verdeutlicht. Während bei dem spreizflügelartigen Propellerflügel 20 das Geschwindigkeitsprofil über die Flügeltiefe gleich bleibt, erfolgt bei dem Normalprofil durch Wirbelbildung eine teilweise Umkehr der Strömungsrichtung, so daß der induzierte Widerstand vergrößert wird. Es ist daher möglich, den Propeller 21 mit einer höheren Drehzahl zu betreiben als es bei Propellern vergleichbarer Größe, jedoch ohne Spaltflügelelemente 3 möglich ist. Durch die optimierte Übertragung der von der Antriebswelle auf den Propeller abgegebenen Energie durch Bündelung der beschleunigten Fluidmasse koaxial zur Propellerlängsachse 23 wird der Wirkungsgrad des Propellers 21 gegenüber bekannten Ausführungsformen erheblich erhöht. Hierzu trägt auch bei, daß das Profilskelett eines Propellerflügels 20 im Bereich des Flügelfußes 10 eine maximale Wölbung aufweist, während die Profilskelette der Spaltflügelelement 3 am Flügelrand 4 gestreckt ausgebildet sind. Fig. 9 zeigt einen Propellerflügel 20 in einer Seitenansicht und verdeutlicht die gekrümmte Ausbildung der Spaltflügelelemente 3 und der Spalte 2. Die Überdeckungen der Spaltkanten 24, 25 einander benachbarter Spaltflügelelemente 3 sind angedeutet. Fig. 10 zeigt den Aufriß der Profilquerschnitte der Spaltflügelelemente 3 des Propellerflügels 20 nach Fig. 9.

Das dem Propeller 21 zugrundeliegende Prinzip der Aufteilung eines jeden Propellerflügels 20 in verschiedene Spaltflügelelemente 3 ist hinsichtlich seiner Anwendung nicht auf Schiffsschrauben beschränkt. Derartige Propeller können auch bei als Propellerturbinen ausgebildeten Wasserturbinen sowie bei Dampf- oder Gasturbinen Anwendung finden.

Spaltflügel 19 mit Spaltflügelelementen 3 in Form von Spaltflügelbündeln 66 können auch für andere Zwecke an wind- und motorbetriebenen Seefahrzeugen verwendet werden, so z. B. als Stabilisierungsflossen und/oder Trimmflossen und/oder Tiefenruder. In diesen Fällen wird die Manövrierfähigkeit des betreffenden Seefahrzeugs verbessert. Es ist auch möglich, die Spaltflügelbündel 66 beidseitig an einem Kiel 61 für z. B. hochseefähige Segeljachten anzuordnen.

Der Kiel einer Segeljacht dient als Ballast und wirkt wie ein vertikaler Tragflügel zur Erzeugung einer hydrodynamischen Seitenkraft. Diese gleicht die von den Segeln ausgehenden seitlichen Kräfte zum Teil aus. Als Ballast stabilisiert der Kiel den Rumpf gegen das Krängungsmoment der auf die Segel wirkenden Kräfte. Üblicherweise besteht der Ballast bei Jachten aus Blei und kann zwischen 70 und 80% des gesamten Bootsgewichts ausmachen. Der Kiel hat als Ballast vor allem die Aufgabe, den Schwerpunkt der Jacht festzulegen. Je tiefer dieser ist, um so stabiler ist das Boot. Als Tragflügel hat ein Kiel maßgeblichen Einfluß auf vier der fünf Widerstandsarten, denen ein bewegter Schiffskörper begegnet. Abhängig von der jeweiligen Formgebung erzeugt er einen Formwiderstand durch Strömungsdruck infolge Turbulenzen. Ferner hat der Kiel eine recht große benetzte Oberfläche und ist längs der Strömungsrichtung kurz, so daß er überproportional zum Reibungswiderstand beiträgt. Drittens vermehrt das Volumen des Kiels, der sich nur ein bis zwei Meter unter der Oberfläche des Wassers befindet, den gesamten wellenerzeugenden Widerstand der Jacht. Viertens beeinflußt die Kielgestalt wesentlich die Größe des induzierten Widerstandes, der durch die Seitenkraft entsteht. Der induzierte Widerstand macht den größten Beitrag des Kiels zum Gesamtwiderstand aus und nimmt ab, wenn die Spannweite des Auftriebssystems vergrößert wird. Eine Vergrößerung der Spannweite ist aus verschiedenen Gründen nur begrenzt möglich. Es ist daher bereits vorgeschlagen worden, den Kiel im Bereich des unteren Endabschnitts seitlich mit kleinen Flügeln zu versehen, wobei die Flügel zur Horizontalen in einem bestimmten Winkel abwärts geneigt angeordnet werden. Durch derartige Flügel wird der induzierte Widerstand des Kiels vermindert. Bei einem ausgeführten Kiel mit Flügeln ist ferner an diesen noch ein Trimmruder vorgesehen worden, das vom Bootsinnern her bedienbar ist.

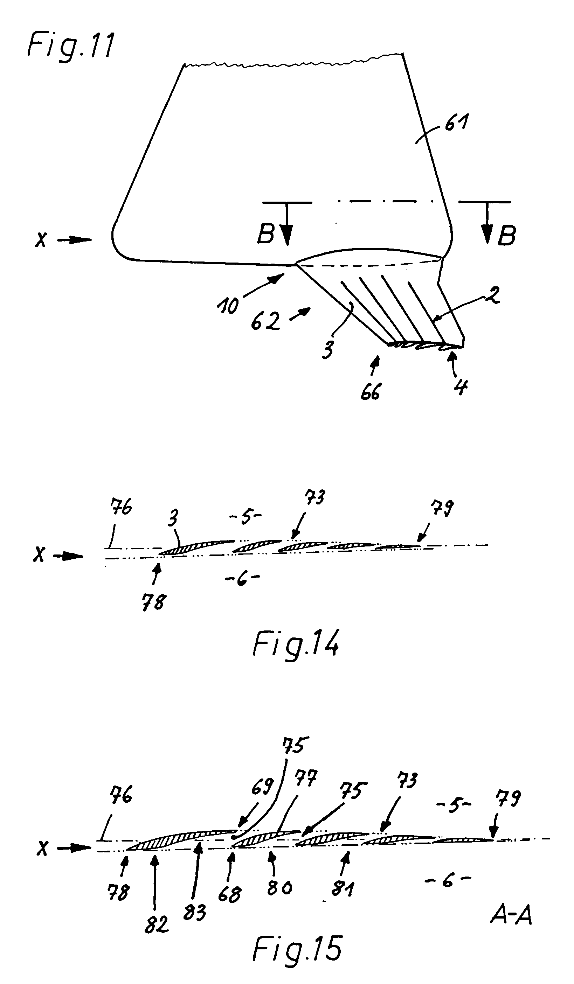

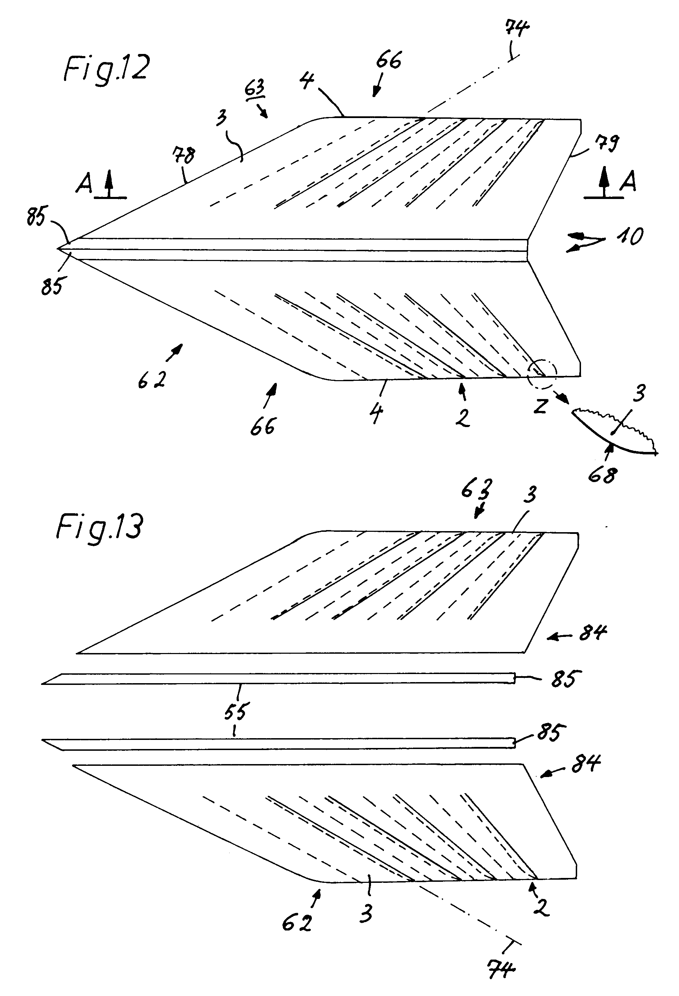

In den Fig. 11 bis 17 ist die Anordnung von als Spaltflügelbündel 66 ausgebildeten Flügeln 62, 63 an einem Kiel 61 dargestellt.

Der in Fig. 11 schematisch in einer Seitenansicht dargestellte Kiel 61 kann eine dem Einsatzgebiet der Jacht angepaßte hydraulische Form haben. An der Unterseite des Kiels 61 sind im Bereich von dessen hinterem Abschnitt beidseitig Flügel 62,63 angeordnet, an denen durch sich bis zum Flügelrand 4 erstreckende Spalte 2 Spaltflügelelemente 3 ausgebildet sind.

In den Figuren 12 und 13 sind die beidseitig an einem Kiel 61 anzubringenden Flügel 62, 63 in der Draufsicht dargestellt. Jeder Flügel 62, 63 bildet ein Spaltflügelbündel 66, das durch die sich bis zum Flügelrand 4 erstreckenden Spalte 2 gebildet wird. Die Spaltlängsachsen 74 sind geradlinig aber schiefwinklig zur Anströmrichtung x ausgerichtet. Die Anströmkante 78 des in Anströmrichtung x ersten Spaltflügelelements 3 sowie die Abströmkante 79 des in Anströmrichtung x letzten Spaltflügelelements 3 sind ebenfalls schiefwinklig zur Anströmrichtung x ausgerichtet.

Der Flügelfuß 10 eines jeden Flügels 62, 63 besteht aus einem einstückigen Fußabschnitt 84 des jeweiligen Spaltflügelbündels 66 und einem mit dem Fußabschnitt 84 verbindbaren Paßstück 85. Die Paßstücke 85 sind an das Profil der Fußabschnitte 84 angepaßt und können mit dem Kiel 61 formschlüssig verbunden werden. Mittels der Paßstücke 85 ist es möglich, Spaltflügelbündel 66 von Flügeln 62, 63 an Kielen 61 mit unterschiedlichem Profil zu befestigen. Hierzu ist es lediglich erforderlich, die den Kielen 61 zugewandten Flächen 55 der Paßstücke 85 so auszubilden, daß eine formschlüssige Verbindung zum Kiel 61 erzielt werden kann. Die Flächen 55 können wie dargestellt eben sein, werden im Regelfall aber eine durch die Profilierung des Kiels 61 bedingte räumlich profilierte Form haben.

Die Spaltflügelelemente 3 sind im Bereich des Flügelrandes 4 anströmseitig geründed ausgebildet, wie es in Fig. 12 und 13 durch die vergrößerte Detaildarstellung gezeigt ist.

Wie aus den Figuren 14 und 15 ersichtlich, sind die überdruckseitigen Anströmkanten 78, 68 der in Anströmrichtung x aufeinanderfolgenden Spaltflügelelemente 3 gegenüber den unterdruckseitigen Abströmkanten 69 der Spaltflügelelemente 3 in Anströmrichtung x horizontal versetzt angeordnet, so daß im Bereich eines jeden Spalteinlasses 81 die druckseitige Anströmkante 68 des einen Spaltflügelelements 3 die unterdruckseitige Abströmkante 69 des anderen Spaltflügelelements 3 überlappt. Im Bereich der unterdruckseitigen Spaltendabschnitte 75 sind die Abströmkanten 69 scharfkantig ausgebildet, wie es bereits zu Fig. 4a und 4b beschrieben wurde. Die Spalte 2 sind düsenförmig ausgebildet, wobei sich die Durchströmungsrichtung von der Druckzone 6 zur Unterdruckzone 5 erstreckt. Die Spaltflügelelemente 3 sind so geformt, daß sie sich innerhalb der durch den Flügelfuß 10 eines jeden Spaltflügelbündels 66 vorgegebenen Profilumhüllenden 73 befinden. Hierdurch wird eine Störung der Strömung im Bereich der Druckzone 6 bzw. der Unterdruckzone 5 vermieden. Bezogen auf die Unterdruckzone 5 können die Spaltflügelelemente 3 zueinander differenzierte Steigungen aufweisen, damit die Flügel 62, 63 abhängig von ihrer Geometrie hydrodynamisch optimiert werden können. Ferner weist die Profilumhüllende 73 insgesammt zur Horizontalen 76 eine Steigung auf.

Die druckseitigen Flächen 80 weisen einen sich an die Anströmkante 78, 68 anschließenden konvex gewölbten Flächenabschnitt 82 auf, an den sich stufenlos ein sich bis zur jeweiligen Abströmkante 69 erstreckender konkav gewölbter Flächenabschnitt 83 anschließt. Durch diese Ausbildung des Spaltquerschnitts wird ein Teil des an der Unterseite des Flügels 62, 63 entlangströmenden Wassers wirbelvermindert zur Oberseite des Flügels 62, 63 geführt und verhindert hier durch Energiezufuhr eine vorzeitige Verwirbelung des an der Oberseite des Flügels 62, 63 vorbeiströmenden Wassers. Prinzipiell ist die Querschnittsausbildung der Spaltflügelelemente 3 der Flügel 62, 63 somit entsprechend der der Spaltflügelelemente 3 des Spaltflügels 19 nach Fig. 4b.

Die Anstellwinkel der Flügel 62, 63 sind simultan oder unabhängig voneinander einstellbar. Hierzu dienen an Bord des Schiffes befindliche Steuereinheiten 86, 87, die jeweils einem der Flügel 62, 63 zugeordnet sind. Mittels der Steuereinheiten 86, 87 kann der Anstellwinkel der Flügel 62, 63 in Abhängigkeit von dem Betriebszustand der den Kiel 61 tragenden Jacht eingestellt werden. Die Einstellung der Anstellwinkel kann besonders vorteilhaft mittels hydraulischer Stellmotore 88 erfolgen, deren Stellung elektrohydraulisch mittels der Steuereinheiten 86, 87 einstellbar ist. Die Stellmotore 88 können z.B. als Drehkolbenmotore oder als Zweikammer-Schwenkhebelantriebe 97 ausgebildet sein.

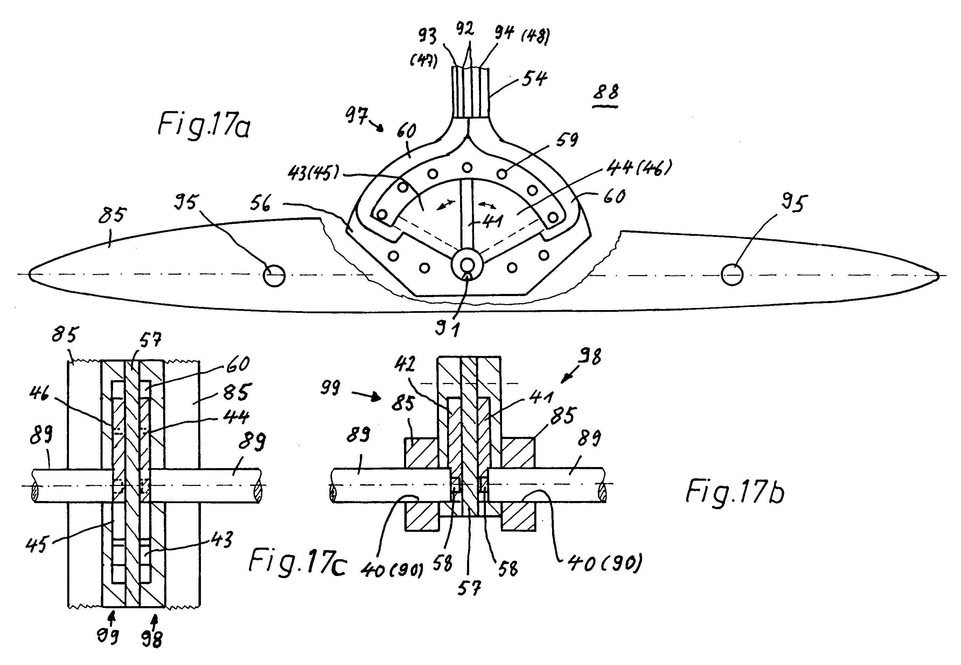

Bei der in Fig. 17 dargestellten Ausführungsform einer Flügelverstelleinrichtung ist in jedem Paßstück 85 als Stellmotor 88 ein hydraulisch betriebener Drehkolbenmotor vorgesehen, dessen Stellung hydraulisch mittels der Steuereinheiten 86, 87 einstellbar ist. Jeder Drehkolbenmotor ist mittels eines Zapfens 89 mit dem Spaltflügelbündel 66 des betreffenden Flügels 62, 63 verbunden. Beidseitig der Drehkolbenmotore sind die Zapfen 89 mittels Lagern 90 gelagert. Um ein axiales Verschieben der Zapfen 89 zu verhindern, ist jeder Zapfen 89 mittels einer Schraubverbindung 96 im Bereich des Paßstücks 85 gesichert. Die Verbindung der Paßstücke 85 mit den Kiel 61 erfolgt mittels angedeuteter Schraubverbindungen 95. Jeder Drehkolbenmotor weist einen Stellungssensor 91 auf, der mittels einer Meßwertleitung 92 mit der zugehörigen Steuereinheit 86, 87 verbunden ist. Hierdurch ist es der die Steuereinheiten 86, 87 bedienenden Person möglich, stets die Anstellwinkel der Flügel 62, 63 überwachen und gegebenenfalls korrigieren zu können. Die Meßwertleitungen 92 sowie die für den Betrieb der Stellmotore 88 erforderlichen Drucköllleitungen 93, 94 werden zweckmäßigerweise durch den Kiel 61 bis in den Schiffsrumpf geführt. Hierzu kann in dem Kiel 61 ein Leerrohr 54 vorgesehen sein. Die Steuereinheiten 86, 87 wirken auf eine elektromagnetische Steuereinheit 51, die mit einem Mehrwegeventil 49 verbunden ist. Dieses ist vorzugsweise am rumpfseitigen Endabschnitt des Kiels 61 angeordnet. Von dem Mehrwegeventil 49 wird Drucköl von einer Druckölversorgungseinrichtung 50 dosiert und geregelt den Drehkolbenmotoren zugeführt.

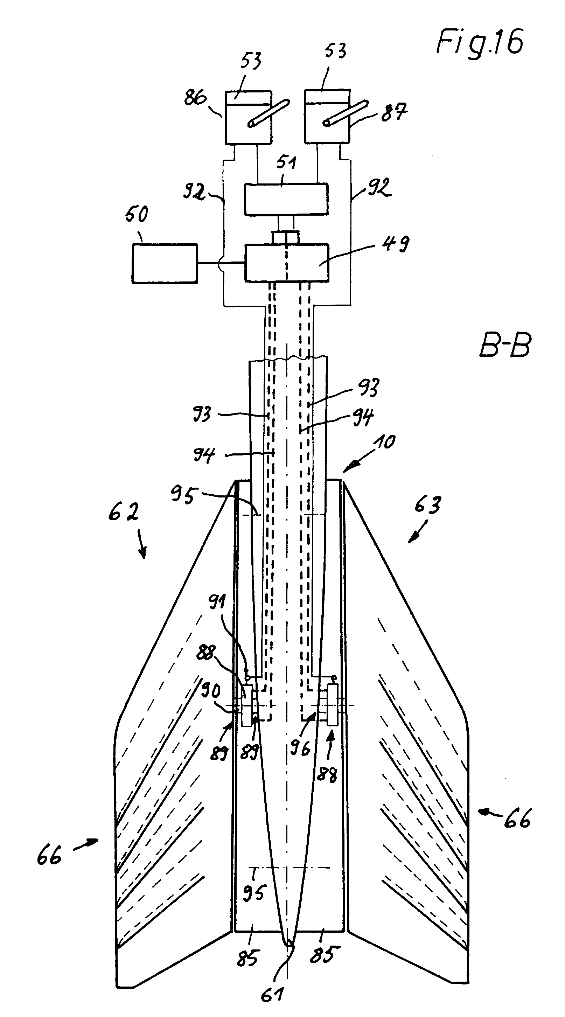

In den Figuren 17a bis 17c ist eine weitere Ausführungsform eines hydraulischen Stellmotors 88 dargestellt, der als Zweikammer-Schwenkhebelantrieb 97 ausgebildet ist. Dieser Zweikammer-Schwenkhebelantrieb 97 ist doppeltwirkend und kann in dem Kiel 61 angeordnet werden, wobei das eine Antriebsteil 98 mit dem Zapfen 89 des einen Spaltflügelbündels 66 und das andere Antriebsteil 99 mit dem Zapfen 89 des anderen Spaltflügelbündels 66 verbunden ist. Die Zapfen 89 sind durch in den Paßstücken 85 als Lager 90 ausgebildete Durchbrechungen 40 geführt. Hierzu ist es vorteilhaft, die Paßstücke 85 aus Bronze und die Zapfen 89 aus Edelstahl auszubilden. In diesem Fall können die Lager 90 als Gleitlager ausgebildet werden. Jedes Antriebsteil 98, 99 weist zwei Kammern 43, 44; 45, 46 auf, die mittels jeweils einer Druckölleitung 93, 94; 47, 48 mit einem elektrohydraulischen Mehrwegeventil 49 verbunden sind. An jedem Antriebsteil 98, 99 ist ferner ein Stellungssensor 91 vorgesehen, der mittels einer Meßwertleitung 92 mit der zugehörigen Steuereinheit 86, 87 verbunden ist. Auch bei Verwendung eines Zweikammer-Schwenkhebelantriebs 97 können die Druckölleitungen 93, 94; 47, 48 sowie die Meßwertleitungen 92 in einem Leerrohr 54 durch den Kiel 61 geführt werden. Das elektrohydraulische Mehrwegeventil 49 kann an dem rumpfseitigen Endabschnitt des Kiels 61 angeordnet sein und ist von einer mit den Steuereinheiten 86, 87 verbundenen elektromagnetischen Steuereinheit 51 betätigbar, wie es bereits zu Fig. 16 erläutert wurde.

Der Zweikammer-Schwenkhebelantrieb 97 besteht aus einem Gehäuse 56, in dem die Kammern 43, 44; 45, 46 ausgebildet und die Schwenkhebel 41, 42 angeordnet sind. Das Gehäuse 56 wird vorteilhafterweise direkt in den Kiel 61 eingesetzt und mittels Schrauben 59 befestigt. Beidseitig des Gehäuses 56 wird dann jeweils ein Paßstück 85 angeordnet und mittels Schraubverbindungen 95 mit dem Kiel 61 verbunden. In der Mitte des Gehäuses 56 ist eine Trennwand 57 ausgebildet, durch die die Kammern 43, 44; 45, 46 geformt werden. Über randseitige Kanäle 60 sind die Kammern 43, 44; 45, 46 mit den Druckölleitungen 93, 94; 47, 48 verbunden. An der Trennwand 57 sind beidseitig Zapfen 58 gelagert, die mit den Zapfen 89 verbunden sind. Die Schwenkhebel 41, 42 sind drehfest mit den zugehörigen Zapfen 89 der Spaltflügelbündel 66 verbunden. Diese Ausführung des Zweikammer-Schwenkhebelantriebs 97 ermöglicht eine besonders kompakte Bauweise bei gleichzeitiger Übertragung großer Stellkräfte und ist daher zur Verstellung des Anstellwinkel von Flügeln 62, 63 besonders geeignet.

Die Kombination von hydrodynamisch optimierten Spaltflügelbündeln 66 an einem Kiel 61 mit der Möglichkeit, die Flügel 62, 63 individuell einstellen zu können, ermöglicht es, die so ausgerüstete Jacht optimal an die jeweiligen Wasser- und Windverhältnisse anzupassen. Darüberhinaus sind Wenden mit extrem kurzen Radien möglich, was insbesondere bei Regatten von Vorteil ist.

**Patentansprüche**

1. Flügelartige profilierte Einrichtung, die von einem Gas oder einem Fluid umströmt wird und zur Verbesserung des aerodynamischen oder hydraulischen Wirkungsgrads profilierte Spaltflügelelemente (3) mindestens eines Spaltflügels (19) mit einem Flügelfuß (10) und einem Flügelrand (4) aufweist, zwischen denen zur Verschiebung der Strömungsabrißzone jeweils ein sich zum flügelspitzenseitigen Flügelrand (4) des Spaltflügels (19) zu einer maximalen Breite erweiternder Spalt (2) angeordnet ist, dadurch gekennzeichnet, daß jeder Spaltflügel (19) aus einer Gruppe von Spaltflügelelementen (3) mit Laminarprofil besteht, zwischen denen die Spalte (2) im Abstand von der dem Flügelfuß (10) zugeordneten Wurzel des Spaltflügels (19) beginnend ausgebildet sind, wobei die Spaltflügelelemente (3) derart zueinander angeordnet sind, daß die Flügelränder (4) der in Anströmrichtung (x) aufeinander folgenden Spaltflügelelemente (3) zueinander jeweils in Richtung der Druckzone (6) des Spaltflügelprofils versetzt ausgebildet sind und der freie Durchströmquerschnitt der Spalte (2) zwischen den Spaltflügelelementen (3) sich bis zum Flügelrand (4) zu einem Maximum vergrößert.

2. Einrichtung nach Anspruch 1, dadurch gekennzeichnet, daß die Profilsehnen (7) der in Anströmrichtung (X) aufeinander folgenden Spaltflügelelemente (3) mit einem zum Flügelrand (4) steigenden Abstand zueinander versetzt angeordnet sind.

3. Einrichtung nach Anspruch 1 und 2, dadurch gekennzeichnet, daß die auf den in Anströmrichtung (X) ersten Spaltflügelelemente (3) folgenden weiteren Spaltflügelelemente (3) bezogen auf die jeweilige Längsachse (8) des Gesamtflügels (9) derart konvex gekrümmt ausgebildet sind, daß die in Richtung der Längsachse (8) zum Flügelrand (4) gerichtete Strömung des Fluids oder Gases abstromseitig in eine allgemein rechtwinklig zur Längsachse (8) gerichtete Strömung umgelenkt wird.

4. Einrichtung nach Anspruch 1 bis 3, dadurch gekennzeichnet, daß die Spaltflügelelemente (3) mit einem Flügelfuß (10) verbunden und in das Profil des Flügelfusses (10) integriert sind.

5. Einrichtung nach Anspruch 1 bis 4, dadurch gekennzeichnet, daß die Spaltflügelelemente (3) etwa über den Bereich des äußeren Drittels der Länge eines Gesamtflügels (9) sich erstreckend angeordnet sind.

6. Einrichtung nach Anspruch 1 bis 3, dadurch gekennzeichnet, daß das in Anströmrichtung (X) vordere Spaltflügelelement (3) allgemein koaxial zur Längsachse (8) des Gesamtflügels (9) ausgerichtet und die folgenden Spaltflügelelemente (3) zur Druckzone (6) vorgewölbt sind.

7. Einrichtung nach Anspruch 1 bis 3, dadurch gekennzeichnet, daß das oder die in Anströmrichtung (X) vorderen Spaltflügelelement (3) gegenüber der Ebene des Gesamtflügels (9) in Anströmrichtung (X) vorgewölbt sind.

8. Einrichtung nach Anspruch 7, dadurch gekennzeichnet, daß mindestens ein mittleres Spaltflügelelement (3) allgemein koaxial zur Längsachse (8) des Gesamtflügels (9) ausgerichtet ist und die folgenden Spaltflügelelemente (3) zur Druckzone (6) vorgewölbt sind.

9. Einrichtung nach Anspruch 1 bis 8, dadurch gekennzeichnet, daß die Spalte (2) zwischen den Spaltflügelelementen (3) düsenförmig mit einer sich von der Druckzone (6) zur Unterdruckzone (5) erstreckenden Strömungsrichtung ausgebildet sind.

10. Einrichtung nach Anspruch 9, dadurch gekennzeichnet, daß die Spaltflügelelemente (3) in der radialen Ebene von einer aneinanderliegenden Stellung in eine voneinander distanzierte Spreizstellung verschwenkbar sind.

11. Einrichtung nach Anspruch 10, dadurch gekennzeichnet, daß jedes Spaltflügelelement (3) individuell mittels eines elektrischen oder hydraulischen Stellantriebs verstellbar ist.

12. Einrichtung nach Anspruch 10 und 11, dadurch gekennzeichnet, daß mindestens eines der Spaltflügelelemente (3) um seine Längsachse verdrehbar ist.

13. Einrichtung nach Anspruch 1 bis 12, dadurch gekennzeichnet, daß die Spaltflügelelemente (3) innerhalb der durch den Flügelfuß (10) des als Spaltflügelelementbündel (66) ausgebildeten Spaltflügels (19) vorgegebenen Profilumhüllenden (73) derart zueinander angeordnet sind, daß die überdruckseitigen Anströmkanten (68) der in Anströmrichtung (X) aufeinander folgenden Spaltflügelelemente (3) gegenüber den unterdruckseitigen Abströmkanten (69) der jeweils vorausgehenden Spaltflügelelemente (3) in Anströmrichtung (X) horizontal derart versetzt ausgebildet sind, daß im Bereich eines jeden Spalteinlasses (81) die druckseitige Anströmkante (68) des einen Spaltflügelelements (3) die unterdruckseitige Abströmkante (69) des anderen Spaltflügelelements (3) überlappt.

14. Einrichtung nach Anspruch 13, dadurch gekennzeichnet, daß im Bereich des unterdruckseitigen Spaltendabschnitts (75) die Abströmkante (69) des in Anströmrichtung (X) ersten Spaltflügelelements (3) scharfkantig, die unterdruckseitige Spaltflügelelementfläche (77) des jeweils in Anströmrichtung (X) folgenden Spaltflügelelements (3) konvex gewölbt ausgebildet ist und die druckseitigen Flächen (80) der Spaltflügelelemente (3) allgemein konkav gewölbt ausgebildet sind.

15. Einrichtung nach Anspruch 14, dadurch gekennzeichnet, daß die druckseitigen Flächen (80) einen sich an die scharfkantig ausgebildete Anströmkante (78, 68) anschließenden konvex gewölbten Flächenabschnitt (82) aufweisen, an den sich stufenlos ein sich bis zur Abströmkante (69) erstreckender konkav gewölbter Flächenabschnitt (83) anschließt.

16. Einrichtung nach Anspruch 1 bis 15, dadurch gekennzeichnet, daß die Spaltflügelelemente (3) bezogen auf die Druckzone (6) eine zueinander differenzierte Steigung aufweisen.

17. Einrichtung nach Anspruch 1 bis 15, dadurch gekennzeichnet, daß die Profilumhüllende (73) zur Horizontalen (76) eine Steigung aufweist.

18. Einrichtung nach Anspruch 1 bis 4, dadurch gekennzeichnet, daß der Flügelfuß (10) und die in dessen Profil integrierten Spaltflügelelemente (3) einen Flügelkopf (1) bilden, der mittels einer Kupplung mit einem Rumpfflügel (12) zu einem Gesamtflügel (9) verbindbar ist.

19. Einrichtung nach Anspruch 18, dadurch gekennzeichnet, daß an dem äußeren Endabschnitt (13) des Rumpfflügels (12) eine Ausnehmung (14) ausgebildet ist, auf oder in die ein Abschnitt des Flügelkopfes (1) geschoben und mittels einer Klebverbindung mit dem Rumpfflügel (12) verbunden ist.

20. Einrichtung nach Anspruch 1 bis 4, dadurch gekennzeichnet, daß an jedem Spaltflügelelement (3) ein Zapfen (15) ausgebildet ist, der durch den Flügelfuß (10) geführt und in den Rumpfflügel (12) gesteckt und mit dem Flügelkopf (1) und Rumpfflügel (12) durch Klebverbindungen (16) verbunden ist, wobei im Bereich der Verbindungsabschnitte der Spaltflügelelemente (3) mit dem Flügelfuß (10) und des Flügelkopfes (1) mit dem Rumpfflügel (12) eine Laminatschicht (17) aus Kunststoff aufgetragen ist, deren äußere Oberfläche dem Profil der Spaltflügelelemente (3), des Flügelfußes (10) und des Rumpfflügels (12) angepaßt ist.

21. Einrichtung nach Anspruch 1 bis 4, 8, 13 bis 17 für einen Schraubenpropeller für Schiffe oder Turbomaschinen, dadurch gekennzeichnet, daß die Spaltflügelelemente (3) eines jeden Propellerflügels (20) in etwa die gleiche vom Fluid umströmte Fläche aufweisen und daß die Spalte (2) in der allgemein radial zur Mittelachse der Propellernabe (33) ausgerichteten Propellerebene konvex gekrümmt ausgebildet sind und sich etwa von der Propellernabe (33) bis zu den Flügelspitzen (34) erstrekken.

22. Einrichtung nach Anspruch 21, dadurch gekennzeichnet, daß an den einander zugewandten abströmseitigen Randseiten (27) und anströmseitigen Randseiten (26) von in Strömungsrichtung aufeinander folgenden Spaltflügelelementen (3) die der Randseite (27) zugeordnete abströmseitige Spaltkante (25) des jeweils in Strömungsrichtung vorderen Spaltflügelelements (3) allgemein parallel zu der der Randseite (26) zugeordneten anströmseitigen Spaltkante (24) des hinteren Spaltflügelelements (3) angeordnet ist, wobei die Spaltkanten (24, 25) schiefwinklig zur Propellerebene angeschärft sind.

23. Einrichtung nach Anspruch 21, dadurch gekennzeichnet, daß das in Drehrichtung des Propellers (21) jeweils vordere Spaltflügelelement (3) der Propellerflügel (20) in einer radialen Normalebene angeordnet ist, die schiefwinklig zur Propellerlängsachse (23) zur Druckzone (6) ausgerichtet ist, und daß die folgenden Spaltflügelelemente (3) zur Druckzone (6) vorgewölbt und zueinander und zum jeweils vorderen Spaltflügelelemente (3) versetzt angeordnet sind.

24. Einrichtung nach Anspruch 1 bis 4, 7 bis 16, für einen Kiel mit beidseitig an diesem angeordneten Flügeln, insbesondere für hochseefähige Segeljachten, dadurch gekennzeichnet, daß jeder Flügel (62, 63) durch sich bis zum Flügelrand (4) erstreckende Spalte (2) als ein aus Spaltflügelelementen (3) bestehender Spaltflügel (19) ausgebildet ist.

25. Einrichtung nach Anspruch 24, dadurch gekennzeichnet, daß die Anströmkante (78) des in Anströmrichtung (X) ersten Spaltflügelelements (3) und die Abströmkante (79) des in Anströmrichtung (X) letzten Spaltflügelelements (3) schiefwinklig zur Anströmrichtung (X) ausgerichtet sind.

26. Einrichtung nach Anspruch 24, dadurch gekennzeichnet, daß die Spaltlängsachsen (74) allgemein geradlinig schiefwinklig zur Anströmrichtung (X) ausgerichtet sind.

27. Einrichtung nach Anspruch 24, dadurch gekennzeichnet, daß die Spaltlängsachsen (74) in Anströmrichtung (X) gekrümmt ausgebildet sind.

28. Einrichtung nach Anspruch 24 bis 27, dadurch gekennzeichnet, daß der Flügelfuß (10) aus einem einstückigen Fußabschnitt (84) des als Spaltflügelelementbündel (66) ausgebildeten Spaltflügels (19) und einem mit dem Fußabschnitt (84) verbindbaren an dessen Profil angepaßten Paßstück (85) besteht, das mit dem Kiel (61) formschlüssig verbindbar ist.

29. Einrichtung nach Anspruch 24 bis 28, dadurch gekennzeichnet, daß der Anstellwinkel der Flügel (62, 63) einstellbar ist.

30. Einrichtung nach Anspruch 29, dadurch gekennzeichnet, daß die Anstellwinkel der Flügel (62, 63) simultan oder unabhängig voneinander einstellbar sind.

31. Einrichtung nach Anspruch 29 und 30, dadurch gekennzeichnet, daß die Anstellwinkel der Flügel (62, 63) mittels einer Steuereinheit (86, 87) in Abhängigkeit von dem Betriebszustand der den Kiel (61) tragenden Jacht einstellbar sind.

32. Einrichtung nach Anspruch 29 bis 31, dadurch gekennzeichnet, daß jeder Flügel (62, 63) mit einem hydraulischen Stellmotor (88) in Wirkverbindung steht, dessen Stellung elektrohydraulisch mittels der Steuereinheit (86, 87) einstellbar ist.

33. Einrichtung nach Anspruch 32, dadurch gekennzeichnet, daß in den Paßstücken (85) jeweils ein Stellmotor (88) angeordnet ist, der mittels eines beidseitig des Stellmotors (88) in einem Lager (90) drehbar gelagerten Zapfens (89) mit dem zugehörigen Spaltflügelelementbündel (66) verbunden ist.

34. Einrichtung nach Anspruch 33, dadurch gekennzeichnet, daß der hydraulische Stellmotor (88) als Drehkolbenmotor ausgebildet ist.

35. Einrichtung nach Anspruch 32, dadurch gekennzeichnet, daß der hydraulische Stellmotor (88) als Zweikammer-Schwenkhebelantrieb (97) ausgebildet ist.

36. Einrichtung nach Anspruch 35, dadurch gekennzeichnet, daß der Zweikammer-Schwenkhebelantrieb (97) doppelwirkend ausgebildet und in dem Kiel (61) angeordnet ist, wobei das eine Antriebsteil (98) mit dem Zapfen (89) des einen Spaltflügelelementbündels (66) und das andere Antriebsteil (99) mit dem Zapfen (89) des anderen Spaltflügelelementbündels (66) verbunden und die Zapfen (89) durch in den Paßstücken (85) als Lager (90) ausgebildete Durchbrechungen (40) geführt sind.

37. Einrichtung nach Anspruch 36, dadurch gekennzeichnet, daß jede Kammer (43, 44; 45, 46) der Antriebsteile (98, 99) mittels einer Drucköleitung (93, 94; 47, 48) mit einem elektrohydraulischen Mehrwegeventil (49) verbunden ist, das mit einer Druckölversorgungseinrichtung (50) in Verbindung steht und mittels Stelleinheiten (86, 87) über eine elektromagnetische Steuereinheit (51) betätigbar ist.

38. Einrichtung nach Anspruch 32 bis 36, dadurch gekennzeichnet, daß jeder Stellmotor (88) bzw. jedes Antriebsteil (98, 99) eines Zweikammer-Schwenkhebelantriebs (97) einen Stellungssensor (91) aufweist, der mittels einer Meßwertleitung (92) mit der zugehörigen Steuereinheit (86, 87) verbunden ist.

39. Einrichtung nach Anspruch 32 bis 38, dadurch gekennzeichnet, daß die Drucköleitungen (93, 94) und Meßwertleitungen (62) in einem Leerrohr (54) durch den Kiel (61) geführt sind.

40. Einrichtung nach Anspruch 23 bis 39 bei wind- und motorbetriebenen Seefahrzeugen, gekennzeichnet dadurch, daß die Spaltflügelelementbündel (66) gegebenenfalls mit den zugehörigen Paßstücken (85) sowie den hydraulischen Stellmotoren (28) als Stabilisierungsflossen und/oder Trimmflossen und/oder Tiefenruder angeordnet sind.

**Claims**

1. Blade-like profiled device for acting on a gaseous or liquid fluid flowing around it and having, as a means for improving aerodynamical or hydraulic efficiency, slotted wing blade elements (3) of at least one slotted wing blade (19) with a blade base (10) and an end edge (4), to shift the flow separation zone a slot (2) is placed, characterized in that, each slotted wing blade (19) consists of a group of slotted wing blade elements (3) being lamellar profiled, between which the slots (2) in a distance from the root of the blade base (10) of the slotted wing blade (19) are arranged, wherein said slotted wing blade elements (3) are placed relative to each other so that consecutive end edges (4) thereof, in an initial flow direction (X), are offset relative to each other in a direction of a pressure zone side (6) of the device, and the free passage cross section of the slots (2) between the slotted wing blade elements (3) enlarges to a maximum at the end edge (4) of the slotted wing blade elements (3).

2. Device according to claim 1, characterized in that, the corresponding chords (7) of consecutive slotted wing blade elements (3) in the initial flow direction (X), are offset relative to each other by an amount that increases with an increasing distance to the end edge (4) of the slotted wing blade elements (3).

3. Device according to claim 2, characterized in that, the slotted wing blade elements (3) that follow a first of the blade elements in said initial flow direction, relative to a respective longitudinal axis of a complete blade of which they are a part are convexly curved so that radially oriented flow of the fluid is deflected on a trailing side in a flow that is oriented generally at a right angle to the radial flow.

4. Device according to claim 1 to 3, characterized in that, the slotted wing blade elements (3) are connected to a blade base (10) and are integrated into the profile of the blade base (10).

5. Device according to claim 1 to 4, characterized in that, slotted wing blade elements (3) are placed extending somewhat beyond a region of an outer third of the complete length of a complete blade (9).

6. Device according to claim 1 to 3, characterized in that, the first of the slotted wing blade elements (3) in the initial flow direction (X) is oriented generally coaxially to a longitudinal axis (8) of the complete blade (9) and subsequent slotted wing blade elements (3) protrude in the direction of the pressure zone side (6).

7. Device according to claim 1 to 3, characterized in that, the first of the slotted wing blade element (3) in the initial flow direction (X) protrudes in the plane of longitudinal axis (8) of the complete blade (9) in initial flow direction (X).

8. Device according to claim 7, characterized in that, a middle slotted wing blade element (3) is oriented generally coaxially to the longitudinal axis (8) of the complete blade (9) and subsequent slotted wing blade elements (3) protrude in the direction of the pressure zone side (6).

9. Device according to claim 8, characterized in that, the slots (2) between the slotted wing blade elements (3) are of a nozzle-shaped configuration with a flow direction extending from the pressure zone (6) side to the underpressure zone (5) side.

10. Device according to claim 9, characterized in that, the slotted wing blade elements (3) are mounted in a manner enabling them to be pivoted in a radial plane from an adjacent position wherein the slotted wing blade elements (3) are adjacent each other into a spread position wherein the slotted wing blade elements (3) are spaced at a distance from each other.

11. Device according to claim 10, characterized in that, each slotted wing blade element (3) is individually shiftable by an electric or hydraulic actuator.

12. Device according to claim 11, characterized in that, at least one slotted wing blade element (3) is rotatable about its longitudinal axis.

13. Device according to claim 1, characterized in that, the slotted wing blade elements (3) are located within a profile envelope (73) that is set by a blade base (10) of the slotted blade (19), are placed relative to each other so that leading edges (68) on the pressure side of the slotted wing blade elements (3) that are consecutive in the initial flow direction (X) are configured to be horizontally offset relative to trailing edges (69) on an underpressure side of each preceding slotted wing blade element (3) in the initial flow direction (X) so that, in the region of an inlet (81) of each slot, the leading edge (68) on the pressure side of one slotted wing blade element (3) overlaps the trailing edge (69) on the underpressure side of the other slotted wing blade element (3).

14. Device according to claim 13, characterized in that, in the region of an end section of the slots on the underpressure side, the trailing edge (69) of a first slotted wing blade element (3) in the initial flow direction (X) has a sharp-edged configuration; wherein the blade surface (77) on the underpressure side of each consecutive slotted wing blade element (3) in the initial flow direction (X) has a convexly curved configuration and wherein the surface on the pressure side of the slotted wing blade elements (3) have a generally concavely curved configuration.

15. Device according to claim 14, characterized in that, the surfaces (80) on the pressure side are convexly curved adjacent to sharp-edged leading edges (78, 68) and merge into a surface section (82) that is concavely curved and extends to the trailing edge (69).

16. Device according to claim 1 to 15, characterized in that, the slotted wing blade elements (3) are differently inclined relative to the pressure zone (6).

17. Device according to claim 1 to 15, characterized in that, said profile envelope (73) is inclined relative to horizontal (76).

18. Device according to claim 1 to 4, characterized in that, the blade base (10) and the slotted wing blade elements (3) integrated into the profile of the blade base (10) forms a blade head (1) which is connected to a blade body (12) by a coupling to form a complete blade (9).

19. Device according to claim 18, characterized in that, a recess (14) formed on an outer end section (13) of the blade body (12) said recess (14) formed and in which a section of the blade head (1) is inserted and connected by an adhesive or the like to the blade body (12).

20. Device according to claim 1 to 4, characterized in that, on each slotted wing blades element (3), a pin (15) is formed that is guided through the blade base (10) and inserted into the blade body (12), said pin (15) being connected to the bladehead (1) and blade body (12) by adhesives (16), and a laminate layer (17) made of plastic, is applied about an area encompassing the connection of the blade base (10) to the slotted wing blade elements (3) and of the blade heat (1) to said blade body (12) in a manner causing an outer surface of the laminate layer to conform to the profile of the slotted wing blade elements (3), blade base (10) and blade body (12) in said area.

21. Device according to claim 1 to 4, 8, 13 to 17, for a screw propeller for ships or turboengines, characterized in that, the slotted wing blade elements (3) of each propeller blade (20) have approximately the same surfaces around which fluid flows and wherein said slots (2) are of a convexly curved configuration in a propeller plane being aligned radial to the center line of propeller hub (33) and extend approximately from the propeller hub (3) to tips (34) of the propeller blades.

**22.** Device according to claim 21, characterized in that, on edge sides (26, 27) on the leading and trailing sides of slotted wing blade elements (3) following one after another slot edges (24, 25) on facing side edges of the slotted wing blade elements (3) are generally parallel to each other and at an oblique angle to the propeller plane.

**23.** Device according to claim 21, characterized in that, the slotted wing blade element (3) of the propeller blade (20) that is in front in the direction of rotation of the propeller (21) is placed in a radially normal plane that is oriented toward the pressure zone (6) at an oblique anlge relative to a longitudinal axis of the propeller (21), and wherein subsequent slotted wing blade elements (3) protrude into pressure zone (6) and are placed offset to each other and to each front slotted wing blade element (3).

**24.** Device according to claim 1 to 4, 7 to 16, for a keel with blades placed on opposite sides thereof especially for sail yachts qualified for the high seas; characterized in that, each blade (62, 63) is formed as slotted blade (19), which consists of slotted wing blade elements (3) being formed by slots (2) which extends to blade edge (4).

**25.** Device according to claim 24, characterized in that, leading edge (78) a slotted wing blade element (3) that is first in an initial flow direction (X) and a trailing edge (79) of a slotted wing blade element (3) that is last in the initial flow direction (X) are oriented at an oblique angle to said initial flow direction (X).

**26.** Device according to claim 24, characterized in that, longitudinal axes (74) of the slots are oriented, generally straight, at an oblique angle to an intial flow direction (X).

**27.** Device according to claim 24, characterized in that, longitudinal axes (74) of the slots are curved in an initial flow direction (X).

**28.** Device according to claim 24 to 27, characterized in that, the blade base (10) is formed of a one-piece base section (84) of a bundel (66) of said slotted blade (19), and wherein an adapter piece (85) is provided that is connectable to said base section (84) and said keel (61) and is matched to the profile of the blade base (10).

**29.** Device according to claim 24 to 28, characterized in that, the blade angle of blades (62, 63) is adjustable.

**30.** Device according to claim 29, characterized in that, the blade angle of blades (62, 63) are adjustable in a simultaneous and an independent manner with respect to each other.

**31.** Device according to claim 29 and 30, characterized in that, the blade angle of the blades (62, 63) is adjustable by a control unit (86, 87) as a function of an operating condition of the yacht having said keel (61).

**32.** Device according to claim 31, characterized in that, each blade (62, 63) is in operational connection to a hydraulic servomotor (88) whose position is adjusted electrohydraulically by said control unit (86, 87).

**33.** Device according to claim 32, characterized in that, the adapter pieces (85), a said servomotor (88) is placed which is connected by a pin (89), that is supported on both sides of the servomotor (88) to be pivotable in a bearing to a respective bundel (66) of slotted wing blade elements (3).

**34.** Device according to claim 33, characterized in that, the hydraulic servomotor (88) is a rotary piston motor.

**35.** Device according to claim 32, characterized in that, the hydraulic servomotor (88) is a twin-chamber pivoting lever drive (97).

**36.** Device according to claim 35, characterized in that, the twin-chamber pivoting lever drive (97) is configured to be double-acting and is placed in the keel (61), and wherein one drive part (98) of the lever drive is connected by a pin (89) to one bundel (66) of slotted wing blade elements (3) and another drive part (99) is connected to the other bundel (66) of slotted wing blade elements (3) by a pin (89), said pins (89) running through openings (40) that are configured as bearings (90) in the adapter pieces (85).

**37.** Device according to claim 36, characterized in that, chamber (43, 44; 45, 46) of each drive part (98, 99) is connected by a compressed oil line (93, 94; 47, 48) to an electrohydraulic multipath valve (49), said valve (49) being connected to a compressed oil supply device (50) being actuatable by actuators (86, 87) through an electromagnetic control unit (51).

**38.** Device according to claim 32 to 36, characterized in that, each servomotor (88) or each drive part (98, 99) of a twin-chamber pivoting lever drive (97) respectively has a position sensor (91), which is connected by a measured value line (92) to a respective control unit (86, 87).

39. Device according to claim 32 to 38, characterized in that, compressed oil lines (93, 94) and the measured value lines (62) are guided through the keel (61) in an empty pipe (54).

40. Device according to claim 23 to 39 for wind- and motor-driven vessels, characterized in that, the bundles (66) of slottes wing blade elements (3) with adapter pieces (85) respectivley as well as the hydraulic servomotors (88) are arranged as a stabilizer fin, trim fin or hydrofoil fin.

## Revendications

1. Dispositif, plongé dans un gaz ou un fluide, comportant une surface profilée en forme d'aile et présentant, pour améliorer le rendement aérodynamique ou hydraulique, des éléments d'aile à fentes profilés (3), d'au moins une aile à fentes (19) comportant une embase d'aile (10) et une extrémité d'aile (4), entre lesquels, pour déplacer la zone de décollement de l'écoulement, est disposée chaque fois une fente (2) s'élargissant jusqu'à une largeur maximum, en allant vers l'extrémité (4) de l'aile à fentes (19), caractérisé en ce que chaque aile à fentes (19) est constituée d'un groupe d'éléments d'aile à fentes (3) à profil laminaire, entre lesquels les fentes (2) sont réalisées de façon à commencer à une certaine distance du talon de l'aile à fentes (19) associé à l'embase d'aile (10), étant entendu que les éléments d'aile à fentes (3) sont disposés les uns par rapport aux autres de telle façon que les extrémités d'aile (4) des éléments d'aile à fentes (3) se suivant les uns les autres dans le sens (x) de l'écoulement du courant du fluide, se décalent chacun les uns par rapport aux autres en allant vers la zone de pression (6) du profil en aile à fente, et étant entendu que la section de passage libre de la fente (2) entre les éléments d'aile à fentes (3), augmente jusqu'à un maximum en allant vers l'extrémité de l'aile (4).

2. Dispositif suivant la revendication 1, caractérisé en ce que les cordes d'aile (7) des éléments d'aile à fentes (3), se suivant les uns les autres dans le sens (x) d'écoulement du courant du fluide, sont disposées décalées les unes par rapport aux autres, avec une distance qui augmente en allant vers l'extrémité de l'aile (4).

3. Dispositif suivant la revendication 1 et la revendication 2, caractérisé en ce que les autres éléments d'aile à fentes (3) suivant, dans le sens (x) d'écoulement du courant du fluide, le premier élément d'aile à fentes (3), sont réalisés avec une courbure convexe, par rapport à l'axe longitudinal (8) concerné de l'ensemble de l'aile (9), de telle façon que l'écoulement du fluide ou du gaz, dirigé vers l'extrémité de l'aile (4) suivant la direction de l'axe longitudinal (8), est dévié vers l'aval, de façon à ce que l'écoulement soit dirigé de façon générale perpendiculairement à l'axe longitudinal (8).

4. Dispositif suivant l'une quelconque des revendications 1 à 3, caractérisé en ce que les éléments d'aile à fentes (3) sont raccordés à une embase d'aile (10) et sont intégrés dans le profil de l'embase d'aile (10).

5. Dispositif suivant l'une quelconque des revendications 1 à 4, caractérisé en ce que les éléments d'aile à fentes (3) sont disposés de façon à s'étendre sensiblement sur le tiers du tiers extérieur de la longueur de la totalité d'une aile (9).

6. Dispositif suivant l'une quelconque des revendications 1 à 3, caractérisé en ce que l'élément d'aile à fentes (3), situé en avant dans le sens (x) d'écoulement du courant, est, d'une façon générale, orienté coaxialement à l'axe longitudinal (8) de l'ensemble de l'aile (9) et que les éléments d'aile à fentes (3) suivants sont courbés en allant vers la zone en pression (6).

7. Dispositif suivant l'une quelconque des revendications 1 à 3, caractérisé en ce que le ou les éléments d'aile à fentes (3), situés en avant dans le sens (x) d'écoulement du courant, sont courbés vers l'avant, dans le sens d'écoulement (x) du courant, par rapport au plan de l'ensemble de l'aile (9).

8. Dispositif suivant la revendication 7, caractérisé en ce qu'au moins un élément d'aile à fentes (3), situé au lileu, a une direction générale coaxiale à l'axe longitudinal de l'ensemble de l'aile (9) et en ce que les éléments d'aile à fentes (3) suivants sont courbés en avant, en allant vers la zone en pression (6).

9. Dispositif suivant l'une quelconque des revendications 1 à 8, caractérisé en ce que les fentes (2) entre les éléments d'aile à fentes (3) sont réalisées avec une forme fuselée, avec une direction d'écoulement allant de la zone en pression (6) vers la zone en dépression (5).

10. Dispositif suivant la revendication 9, caractérisé en ce que les éléments d'aile à fentes (3) peuvent pivoter, dans le plan radial, d'une position où ils sont placés les uns contre les autres, à une position d'écartement où ils sont à une certaine distance les uns des autres.

11. Dispositif suivant la revendication 10, caractérisé en ce que chaque élément d'aile à fentes (3) peut être positionné individuellement au moyen d'un dispositif de positionnement électrique ou hydraulique.

12. Dispositif suivant la revendication 10 et la revendication 11, caractérisé en ce qu'au moins l'un des éléments d'aile à fentes (3) peut pivoter autour de son axe longitudinal.

13. Dispositif suivant l'une quelconque des revendications 1 à 12, caractérisé en ce qu'à l'intérieur des enveloppes de profil (73) prédéteminées par l'embase (10) de l'aile à fentes (19) réalisée sous la forme d'un faisceau (66) d'éléments d'aile à fentes, les éléments d'aile à fentes (3) sont disposés les uns par rapport aux autres de telle façon que les bords d'attaque (68), côté surpression, des éléments d'aile à fentes (3), se suivent les uns les autres dans la direction (x) de l'écoulement du courant, sont chacun réalisés décalés horizontalement dans le sens (x) d'écoulement du courant, par rapport aux bords de fuite (69), côté dépression, de chaque élément d'aile à fentes (3) concerné, qui précède, de telle façon que, dans la zone de chacune des entrées de fente (81), le bord d'attaque (68), côté pression, de chaque élément d'aile à fentes (3) recouvre le bord de fuite (69), côté dépression, de l'autre élément d'aile à fentes (3).

14. Dispositif suivant la revendication 13, caractérisé en ce que, dans la zone de la partie, côté dépression, (75) de la fente, le bord de fuite (69) du premier élément d'aile à fentes (3) dans le sens (x) d'écoulement du courant est réalisé à arête vive, et en ce que la surface (77), côté dépression, de chaque élément d'aile à fentes (3), qui lui fait suite dans le sens (x) d'écoulement du courant, est réalisé avec une courbure convexe et en ce que les surfaces (80), côté pression, des éléments d'aile à fentes (3) sont réalisés, d'une façon générale, avec une courbure concave.

15. Dispositif suivant la revendication 13, caractérisé en ce que les surfaces (80), côté pression, présentent une partie de surface (82) à courbure convexe, qui se raccorde au bord d'attaque (78, 68) réalisé à arête vive, et à laquelle se raccorde, sans discontinuité, une partie de surface (83) à courbure concave, s étendant jusqu'au bord de fuite (69).

16. Dispositif suivant l'une quelconque des revendications 1 à 15, caractérisé en ce que les éléments d'aile à fentes (3) présentent entre eux, par rapport à la zone en pression (6), une inclinaison montante différenciée.

17. Dispositif suivant l'une quelconque des revendications 1 à 15, caractérisé en ce que les enveloppes de profil (73) présentent une inclinaison montante par rapport à l'horizontale (76).

18. Dispositif suivant l'une quelconque des revendications 1 à 4, caractérisé en ce que l'embase d'aile (10) et les éléments d'aile à fentes (3), qui s'intègrent dans son profil, forment une tête, ou extrémité, d'aile (1) qui peut être raccordée, par accouplement avec une aile de fuselage ou de carène (12), à un ensemble d'aile (9).

19. Dispositif suivant la revendication 18, caractérisé en ce que, sur la partie d'extrémité extérieure (13) de l'aile de fuselage ou de carène (12), est réalisé un évidement (14), sur lequel, ou dans lequel, est introduite une partie de la tête d'aile (1), qui est assemblée par collage avec l'aile de fuselage ou de carène (12).

20. Dispositif suivant l'une quelconque des revendications 1 à 4, caractérisé en ce que, sur chaque élément d'aile à fentes (3), est réalisé un tourillon (15) traversant l'embase d'aile (10), pénétrant dans l'aile de fuselage ou de carène (12), et assemblé par collag avec la tête d'aile (1) et l'aile de fuselage ou de carène (12), étant entendu que, dans la zone des parties de raccordement des éléments d'aile à fentes (3) avec l'embase de l'aile (10), et dans la zone des parties de raccordement de la tête d'aile (1) avec l'aile de fuselage ou de carène (12), est rapportée une couche de stratifié (17) en matière plastique, dont la surface externe est ajustée au profil des éléments d'aile à fentes (3), de l'embase de l'aile (10) et de l'aile de fuselage ou de carène (12).

**21.** Dispositif suivant les revendications 1 à 4, 8, 13 à 17, pour une hélice propulsive pour bateaux ou turbomachines, caractérisé en ce que les éléments d'aile à fentes (3) de chaque pale (20) d'hélice propulsive présentent sensiblement la même surface entourée par le fluide, et en ce que les fentes (2) sont réalisées avec une courbure convexe dans le plan de l'hélice, orienté, de façon générale, radialement par rapport au moyeu d'hélice (33), et en ce qu'elles s'étendent sensiblement du moyeu d'hélice (33) jusqu'aux extrémités d'ailes (34).

**22.** Dispositif suivant la revendication 21, caractérisé en ce que, sur les faces (26) des bords d'attaque et les faces (27) des bords de fuite, se faisant face les unes les autres, d'éléments d'aile à fentes (3), qui se font suite les uns les autres dans le sens d'écoulement du courant, l'arête de fente (25), associée à la face du bord (27), de chacun des éléments d'aile à fentes (3) concerné situé en avant, est disposée, d'une façon générale, parallèlement à l'arête de la fente (24), côté arrivée du courant de fluide, associée à la face de bord (26), de l'élément d'aile à fentes (3) situé en arrière, étant entendu que les arêtes (24, 25) de la fente présentent des angles d'attaque donnant une inclinaison vers le plan de l'hélice.

**23.** Dispositif suivant la revendication 21, caractérisé en ce que chacun des éléments d'aile à fentes (3) concerné, de la pale (20) d'hélice propulsive, situé en avant dans le sens de rotation de l'hélice (21), est disposé dans un plan normal radial, plan qui est orienté vers la zone en pression (6), avec une inclinaison par rapport à l'axe longitudinal (23) de l'hélice propulsive, et en ce que les éléments d'aile à fentes (3) suivants sont courbés en avant vers la zone en pression (6) et sont disposés avec un décalage les uns par rapport aux autres et par rapport à chacun des éléments d'aile à fentes (3) concerné situé en avant.

**24.** Dispositif suivant les revendications 1 à 4, 7 à 16, pour une quille comportant deux ailes disposées sur ses deux côtés, en particulier pour des yachts de haute mer à voile, caractérisé en ce que chaque aile (62, 63) es, au moyen de fentes (2) s'étendant jusqu'au bord de l'aile (4), réalisée sous la forme d'une aile à fentes (19) constituée d'éléments d'aile à fentes (3).

**25.** Dispositif suivant la revendication 24, caractérisé en ce que le bord d'attaque (78) du premier élément d'aile à fentes (3) dans le sens (x) de l'écoulement du courant et le bord de fuite du dernier élément d'aile à fentes (3) dans le sens (x) de l'écoulement du courant ont une direction inclinée par rapport à la direction (x) d'écoulement du courant.

**26.** Dispositif suivant la revendication 24, caractérisé en ce que les axes longitudinaux (74) des fentes sont, de façon générale, orientés en ligne droite, en formant un angle oblique par rapport à la direction (x) d'écoulement du courant du fluide.

**27.** Dispositif suivant la revendication 24, caractérisé en ce que les axes longitudinaux (74) des fentes sont réalisés avec une courbure dans la direction (x) d'arrivée du courant.

**28.** Dispositif suivant la revendication 24 à la revendication 27, caractérisé en ce que l'embase d'aile (10) est constituée d'une partie d'embase (84) monobloc de l'aile à fentes (19) réalisée sous la forme d'un faisceau d'éléments d'aile à fentes (66), et est constituée d'une pièce de raccordement (85) ajustée au profil de la partie d'embase (84) et pouvant être assemblée avec elle, pièce de raccordement qui peut être reliée à engagemeznt positif avec la quille (61).

**29.** Dispositif suivant les revendications 24 à 28, caractérisé en ce que l'angle de positionnement des ailes (62, 63) est réglable.

**30.** Dispositif suivant la revendication 29, caractérisé en ce que les angles de positionnement des ailes (62, 63) sont réglables simultanément ou indépendamment.

**31.** Dispositif suivant la revendication 29 et la revendication 30, caractérisé en ce que les angles de positionnement des ailes (62, 63) sont réglables au moyen d'une unité de commande (86, 87), on fonction de l'état de marche du yacht portant la quille (61).

**32.** Dispositif suivant les revendications 29 à 31, caractérisé en ce que chacune des ailes (62, 63) est reliée positivement à un moteur hydraulique (88) de positionnement, dont la position est réglable électro-hydrauliquement au moyen de l'unité de commande (86, 87).

**33.** Dispositif suivant la revendication 32, caractérisé en ce que, dans chacune des pièces de raccordement (85) concernée, est disposée un moteur de positionnement (88), qui est relié avec le faisceau d'éléments d'aile à fentes (66) correspondant, au moyen d'un tourillon (89) monté tournant dans un palier (90) des deux côtés du moteur de positionnement (88).

34. Dispositif suivant la revendication 33, caractérisé en ce que le moteur de positionnement (88) hydraulique est réalisé sous la forme d'un moteur à piston rotatif.

35. Dispositif suivant la revendication 32, caractérisé en ce que le moteur de positionnement (88) hydraulique est réalisé sous la forme d'un moteur (97) à leviers pivotants, à double chambre.

36. Dispositif suivant la revendication 35, caractérisé en ce que le moteur (97) à leviers pivotants, à double chambre est réalisé à double effet et est placé dans la quille (61), étant entendu que l'une des pièces d'entraînement (98) est reliée au tourillon (89) de l'un des faisceaux d'éléments d'aile à fentes (66) et que l'autre pièce d'entraînement (99) est reliée au tourillon (89) de l'autre faisceau d'éléments d'aile à fentes (66), et que les tourillons (89) passent au travers d'échancrures (40) réalisées comme paliers (90) dans les pièces de raccordement (85).

37. Dispositif suivant la revendication 36, caractérisé en ce que chaque chambre (43, 44; 45, 46) des pièces d'entraînement (98, 99) est reliée, par une conduite d'huile sous pression (93, 94; 47, 48), à une soupape électro-hydraulique à plusieurs voies (49), qui est constamment reliée à un dispositif d'alimentation en huile sous pression (50) et qui peut être actionnée au moyen d'unités de commande (86, 87) par l'intermédiaire d'une unité de commande électromagnétique(51).

38. Dispositif suivant les revendications 32 à 36, caractérisé en ce que chaque moteur de positionnement (88), ou chaque pièce d'entraînement (98, 99) d'un moteur (97) à leviers pivotants, à double chambre, présente un détecteur de position (91) qui est relié avec l'unité de commande (86, 87) au moyen d'une conduite de mesure (92).

39. Dispositif suivant les revendications 32 à 38, caractérisé en ce que les conduites d'huile sous pression (93, 94) et que les conduites de mesure (92) traversent la quille (61) dans un tubage (54).

40. Dispositif suivant les revendications 23 à 39, dans le cas de vaisseaux de mer à propulsion par le vent ou par moteur, caractérisé en ce que les faisceaux d'éléments d'aile à fentes (66), le cas échéant avec les pièces de raccordement (85) correspondantes, ainsi qu'avec les moteurs de positionnement hydrauliques (28), sont disposés sous la forme d'empennages de stabilisation et/ou d'empennages de compensation et/ou de volets de profondeur.

Fig.1

Fig.2

Fig.3

Fig. 4a

Fig. 4b

EP 0 282 830 B1

Fig.5

*Fig. 6*

Fig. 7

Fig. 8

Fig.9

Fig.10

EP 0 282 830 B1

*Fig.11*

61

X →

B ↓    ↓ B

10
62 →
66
3
2
4

*Fig.14*

76    3    -5-    73    79

X →

78
-6-

*Fig.15*

75
69  77  75  73
76    -5-  79

X →

78  82  83  68  80  81  -6-

A-A

*Fig.15*

Fig.12

Fig.13

Fig.16

B-B

EP 0 282 830 B1

Fig.17a

Fig.17b

Fig.17c